(19) **Europäisches Patentamt**
**European Patent Office**
**Office européen des brevets**

(11) **EP 1 742 376 B1**

(12) **FASCICULE DE BREVET EUROPEEN**

(45) Date de publication et mention
de la délivrance du brevet:
**30.12.2009 Bulletin 2009/53**

(51) Int Cl.:
**H04B 1/69** *(2006.01)* **G01S 7/02** *(2006.01)*

(21) Numéro de dépôt: **06116497.6**

(22) Date de dépôt: **03.07.2006**

(54) **Procédé de fusion d'informations issues de récepteurs radioélectriques et dispositif de réception radioélectrique**

Nachrichtenzusammenmischungsverfahren für Nachrichten, die von Funkempfänger stammen und Funkempfängervorrichtung

Information fusion method for informations coming from radio receivers and radioelectrical reception device

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.07.2005 FR 0507143**

(43) Date de publication de la demande:
**10.01.2007 Bulletin 2007/02**

(73) Titulaire: **Thales**
**92200 Neuilly Sur Seine (FR)**

(72) Inventeurs:
• **Ziegler, Philippe**
**78960, Voisin le Bretonneux (FR)**
• **Lantz, Olivier**
**78220, Viroflay (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 012 119    US-A- 4 025 920**
**US-A- 5 963 653    US-A1- 2003 179 084**

**EP 1 742 376 B1**

**Description**

L'invention concerne un procédé de fusion d'informations issues de capteurs radioélectriques. En particulier, l'invention s'applique à l'optimisation de la chaîne d'exploitation des récepteurs large bande instantanée et des récepteurs bande étroite. L'invention a encore pour objet un système de réception radioélectrique.

Afin d'assurer la protection des avions, des navires, des drônes ou de tout autre porteur contre les menaces que peuvent représenter les radars hostiles ou les missiles, des systèmes d'autoprotection peuvent être installés à bord. Ils ont notamment pour fonction la détection et l'identification d'émissions radioélectriques, parmi lesquelles figurent les impulsions émises par un radar. Pour remplir ces fonctions, les systèmes d'autoprotection comportent notamment au moins un récepteur radioélectrique adapté à la détection de signaux radioélectriques et un dispositif de traitement des informations provenant du récepteur.

EP 0012119 décrit un dispositif et un procédé associé comprenant une réception de plusieurs signaux en provenance de plusieurs radars. Les impulsions reçues sont filtrées a l'aide d'un filtre adapté au radar émetteur et mémorisées avec leur temps d'arrivée. Puis on procède a l'extraction des paramètres en deux temps:

- une extraction pendant une durée dt, et
- une extraction sur une longue durée, en intégrant l'environnement extrait durant ladite durée dt.

Si plusieurs extractions sont effectuées en parallèle, les données sont rassemblées à l'aide d'un autre moyen.

US 4 025 920 porte sur l'identification de signaux radars. Les signaux radars sont reçus par des antennes. Différents modules couplés en sortie des antennes délivrent des paramètres liés aux signaux reçus. Les données délivrées par les modules precités sont pondérées par deux autres modules puis stockées dans un registre.

La sensibilité d'un récepteur radioélectrique, c'est-à-dire le seuil de puissance à partir duquel un signal radioélectrique est détecté, doit être adaptée au niveau des signaux radioélectriques les plus faibles en puissance que doit détecter le système d'autoprotection. Toutefois, les récepteurs radioélectriques caractérisés par leur grande sensibilité, par exemple les récepteurs superhétérodynes, ne sont capables de détecter les signaux radioélectriques que sur une bande de fréquences limitée, de l'ordre de 1 GHz par exemple. Cette bande de fréquences limitée ne permet pas de couvrir à tout instant la bande de fréquences dans laquelle les impulsions radars peuvent être émises. Il existe cependant des détecteurs couvrant une large bande de fréquences, de l'ordre par exemple de 20GHz, mais dont la sensibilité ne permet pas de détecter les impulsions radars de faible niveau.

Pour couvrir une large bande de fréquences et détecter les impulsions de faible niveau, les systèmes d'autoprotection utilisent conjointement au moins un récepteur large bande instantanée et un récepteur bande étroite. Chaque récepteur fournit des informations sur son environnement radioélectrique. Le dispositif de traitement des informations utilise notamment ces informations pour générer des pistes pour chaque émetteur intercepté. Une fusion des informations provenant de l'ensemble des récepteurs est alors nécessaire si l'on souhaite disposer d'une vision globale et synthétique de l'environnement radioélectrique du porteur. La fusion des informations produites par les récepteurs s'effectue traditionnellement à partir des pistes calculées par le dispositif de traitement des informations.

Aussi, il est nécessaire de mettre en oeuvre pour chaque récepteur du système d'autoprotection les moyens nécessaires au calcul des pistes. De plus, la vitesse d'adaptation des paramètres du récepteur à bande étroite face à des émissions interceptées par le récepteur large bande est limitée par le temps nécessaire aux calculs des pistes. L'indépendance des récepteurs aboutit de plus à augmenter le poids et les dimensions du système d'autoprotection.

L'invention a notamment pour but de pallier les inconvénients précités. A cet effet, l'invention a pour objet un procédé de fusion d'informations issues de capteurs radioélectriques. Les récepteurs radioélectriques, lorsqu'ils interceptent des signaux radioélectriques, génèrent au moins un descripteur d'impulsions pour chaque impulsion de chaque signal radioélectrique intercepté donné. Les descripteurs d'impulsions comportent un ensemble de caractéristiques propres à une impulsion donnée. Le procédé comporte au moins les étapes suivantes :

- une étape de collecte des descripteurs d'impulsions générés par les récepteurs radioélectriques;
- une étape de corrélation des descripteurs d'impulsions aboutissant à la génération d'un descripteur d'impulsions corrélé pour chaque impulsion de chaque signal radioélectrique intercepté à partir des descripteurs d'impulsions collectés.

Avantageusement, le procédé selon l'invention comporte une étape de filtrage des descripteurs d'impulsions corrélés par application d'un ou plusieurs filtres, chaque filtre comportant un ensemble de critères.

Dans un mode de réalisation, les caractéristiques d'un descripteur d'impulsions corrélé sont obtenues :

- en comparant les caractéristiques incluses dans les descripteurs d'impulsions générés par les récepteurs radioélectriques ;
- en déterminant à partir des comparaisons les descripteurs d'impulsions décrivant les mêmes impulsions ;
- en sélection pour chaque paramètre le descripteur d'impulsions qui doit fournir ce paramètre.

La comparaison des caractéristiques incluses dans les descripteurs d'impulsions générés par les récepteurs radioélectriques utilise par exemple au moins comme critère l'un des critères suivant :

- le temps d'arrivée de l'impulsion,
- le niveau de puissance de l'impulsion,
- la fréquence de l'impulsion,
- la largeur de l'impulsion.

Lorsqu'il existe pour une impulsion d'un signal radioélectrique donné plusieurs descripteurs d'impulsions générés par plusieurs récepteurs radioélectriques, une table prenant en compte les différents états de comparaison des paramètres figurant dans les descripteurs d'impulsions détermine quel paramètre de quel descripteur d'impulsions doit être utilisé pour fournir les paramètres du descripteur d'impulsions corrélés. Lorsqu'il existe pour une impulsion d'un signal radioélectrique donné un seul descripteur d'impulsions généré par un seul récepteur radioélectrique, le descripteur d'impulsions corrélé comporte au moins les mêmes caractéristiques que le descripteur d'impulsions généré par le récepteur radioélectrique ayant intercepté l'impulsion.

Dans un autre mode de réalisation, l'étape de filtrage comporte au moins un filtre qui, lorsque certains paramètres d'un descripteur d'impulsions corrélés satisfont aux critères dudit filtre, ajoute un paramètre au descripteur d'impulsions corrélé correspondant à un numéro prédéterminé et connu du procédé selon l'invention. Les critères du filtre s'appliquent par exemple au moins sur l'un des paramètres d'un descripteur d'impulsions corrélés (33) suivant :

- le niveau de puissance de l'impulsion,
- sur la fréquence de l'impulsion,
- sur la largeur de l'impulsion,
- la direction d'arrivée.

Dans un autre mode de réalisation, l'étape de filtrage comporte au moins un filtre qui, lorsque certains paramètres d'un descripteur d'impulsions corrélés satisfont aux critères dudit filtre, génère une ou plusieurs commandes sur une sortie des commandes. Les critères du filtre s'appliquent par exemple au moins sur l'un des paramètres d'un descripteur d'impulsions corrélés suivant :

- le niveau de puissance de l'impulsion,
- sur la fréquence de l'impulsion,
- sur la largeur de l'impulsion,
- la direction d'arrivée.

Dans un mode de réalisation avantageux, l'étape de filtrage comporte au moins un filtre qui, lorsque certains paramètres d'un descripteur d'impulsions corrélés satisfont aux critères dudit filtre, supprime le descripteur d'impulsions corrélé. Les critères du filtre s'appliquent par exemple au moins sur l'un des paramètres d'un descripteur d'impulsions corrélés suivant :

- le niveau de puissance de l'impulsion,
- sur la fréquence de l'impulsion,
- sur la largeur de l'impulsion,
- la direction d'arrivée.

En outre, l'invention a encore pour objet un système de réception radioélectrique comportant au moins un récepteur radioélectrique large bande instantanée et un récepteur radioélectrique bande étroite, au moins un processeur d'impulsions. Le récepteur radioélectrique large bande instantanée lorsqu'il intercepte des signaux radioélectriques génèrent au moins un descripteur d'impulsions pour chaque impulsion de chaque signal radioélectrique intercepté donné. Le récepteur radioélectrique bande étroite lorsqu'il intercepte des signaux radioélectriques génèrent au moins un descripteur d'impulsions pour chaque impulsion de chaque signal radioélectrique intercepté donné. Le processeur d'impulsions est adapté à :

- la collecte des descripteurs d'impulsions générés par le récepteur radioélectrique large bande instantanée et le récepteur radioélectrique large bande étroite;
- la corrélation des descripteurs d'impulsions aboutissant à la génération d'un descripteur d'impulsions corrélé pour chaque impulsion de chaque signal radioélectrique intercepté à partir des descripteurs d'impulsions collectés.

L'invention a notamment pour avantages qu'elle permet de déclencher des actions adaptées dans un délai optimum après la détection d'un signal radioélectrique. Elle permet de plus d'optimiser l'emploi du récepteur bande étroite en limitant son utilisation au cas où le récepteur large bande instantanée ne permet pas de caractériser assez finement le signal radioélectrique.

D'autres caractéristiques et avantages de l'invention apparaîtront à l'aide de la description qui suit faite en regard des dessins annexés qui représentent :

- la figure 1, un diagramme représentant la sensibilité et la bande de fréquences utile pour un récepteur large bande instantanée et un récepteur bande étroite ;

- la figure 2, un système de réception de signaux radioélectriques selon l'état de l'art ;

- la figure 3, un système de réception de signaux radioélectriques selon l'invention ;

- la figure 4, un procédé de fusion d'informations issues de capteurs radioélectriques selon l'invention.

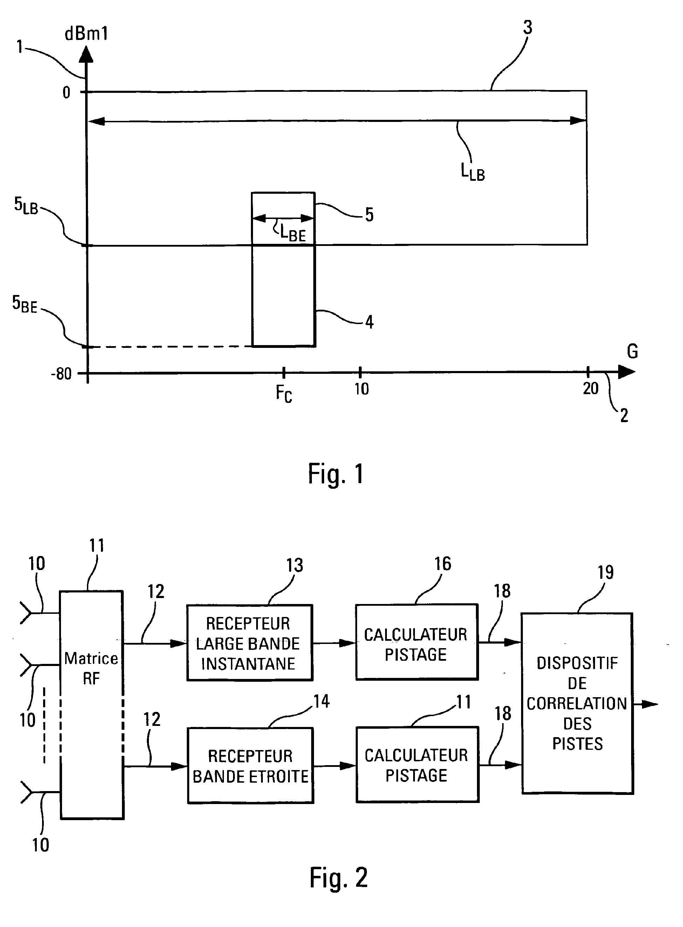

La figure 1 est un diagramme représentant la sensibilité et la bande de fréquences utile pour un récepteur large bande instantanée et un récepteur bande étroite. Les signaux radioélectriques, comme par exemple les impulsions émises par un radar, ont notamment pour grandeur physique leur fréquence ainsi que leur niveau de puissance. Selon l'émetteur des signaux radioélectriques, la différence de fréquence entre deux signaux radioélectriques peut sensiblement atteindre 20GHz. Les récepteurs radioélectriques ont notamment pour fonction l'interception de signaux radioélectriques et la mesure des grandeurs physiques qui les caractérisent. Parmi les différents types de récepteurs radioélectriques, on appelle récepteur large bande instantanée, les récepteurs capables d'intercepter et de mesurer les signaux radioélectriques dans une large plage de fréquences, pouvant atteindre par exemple 20 GHz. Les récepteurs radioélectriques large bande instantanée sont suffisamment sensibles pour détecter des signaux radioélectriques dont le niveau est supérieur à -50 décibels milliwatts isotropiques environ. Il existe un second type de récepteurs radioélectriques appelé récepteur bande étroite, dont les récepteurs superhétérodynes font notamment partie. Les récepteurs bande étroite sont capables d'intercepter et de mesurer les signaux radioélectriques dans une plage de fréquences pouvant atteindre par exemple 1 GHz. En contrepartie de leur plage de fréquences réduite par rapport à un récepteur large bande instantanée, le niveau de puissance le plus faible du signal radioélectrique que ces détecteurs bande étroite sont capables d'intercepter et de mesurer est de l'ordre de -75 décibels milliwatts isotropiques.

On revient à la figure 1. Le diagramme comporte un axe des abscisses 2 indiquant la fréquence en gigahertz des signaux radioélectriques. L'axe des abscisses 2 est échelonné de 0 à 20 GHz. Le diagramme comporte un axe des ordonnées 1 indiquant le niveau du signal reçu par le radar exprimé en décibel milliwatt isotropique. L'axe des ordonnées 1 est échelonné de 0 à -80 décibels milliwatts isotropiques. Une surface rectangulaire 3 représente l'ensemble des signaux radioélectriques caractérisés par leur fréquence et leur niveau qu'un récepteur large bande instantanée est capable instantanément d'intercepter et de mesurer. La bande de fréquences $L_{LB}$ qu'est capable de couvrir un récepteur large bande instantanée est de l'ordre de 20 GHz. Le seuil $S_{LB}$ en dessous duquel la puissance d'un signal radioélectrique est trop faible pour être intercepter et mesurer par un récepteur large bande instantanée est de l'ordre de -50 décibels milliwatts isotropiques. Une surface rectangulaire 4 représente l'ensemble des signaux radioélectriques caractérisés par leur fréquence et leur niveau qu'un récepteur bande étroite est capable instantanément d'intercepter et de mesurer. La bande de fréquences $L_{BE}$ qu'est capable de couvrir un récepteur bande étroite est de l'ordre de 1 GHz. La fréquence centrale $F_C$ du récepteur bande étroite permet de déterminer la fréquence des signaux radioélectriques qui peuvent être instantanément interceptés et mesurés : il s'agit des signaux radioélectriques dont la fréquence est comprise entre $F_C - \dfrac{L_{BE}}{2}$ et $F_C + \dfrac{L_{BE}}{2}$. Sur la figure 1, la fréquence centrale $F_C$ est sensiblement égale à 8 GHz. Toutefois, la plupart des récepteurs bande étroite peuvent être configurés dynamiquement afin de modifier la fréquence centrale $F_C$. Le seuil $S_{BE}$ en dessous duquel la puissance d'un signal radioélectrique est trop faible pour que le signal radioélectrique soit intercepté et mesuré par un récepteur large bande instantanée est de l'ordre de -75 décibels milliwatts isotropiques. La surface 5, correspondant à l'intersection de la surface 3 et de la surface 4, représente l'ensemble des signaux radioélectriques qui peut être intercepté et mesuré par un récepteur large bande instantanée ou un récepteur bande étroite à un instant donné.

Aussi dans le cas d'un système d'autoprotection, dont la fonction d'écoute nécessite la mise en oeuvre de récepteurs radioélectriques, l'ensemble des signaux radioélectriques provenant notamment des radars ne peut être intercepté et mesuré instantanément par un seul type de récepteur radioélectrique. En effet, les impulsions produites par deux radars distincts présents dans l'environnement d'un porteur peuvent par exemple être distantes de 20 GHz. De plus, les impulsions générées par un radar rotatif par exemple peuvent avoir un niveau de l'ordre de -75 décibels milliwatts isotropiques, voire inférieure.

La figure 2 illustre un système de réception de signaux radioélectriques selon l'état de l'art. Le système de réception de signaux radioélectriques a notamment pour fonction l'interception et le pistage de signaux radioélectriques, parmi lesquelles figurent les impulsions émises par un radar ou encore les émissions d'un système de communication. Le système de réception de signaux radioélectriques selon l'état de l'art comporte notamment des antennes réceptrices 10 reliées à une matrice radiofréquence 11. Les signaux collectés 12 sont transmis d'une part à un récepteur large bande instantanée 13 et d'autre part à un récepteur bande étroite 14. Le récepteur large bande instantanée 13 délivre en sortie des informations sur les signaux radioélectriques qu'il a intercepté et mesuré. De même, le récepteur bande étroite 14 délivre en sortie des informations sur les signaux radioélectriques qu'il a intercepté et mesuré. Les informations issues du récepteur large bande instantanée 13 sont transmises à un calculateur de pistage 16. On appelle piste l'ensemble des informations sur une période donnée caractérisant un signal radioélectrique provenant d'une même source émettrice. Le calculateur de pistage 16 génère des pistes 18 à partir des informations envoyées par le récepteur large bande instantanée 13. De même, les informations issues du récepteur bande étroite 13 sont transmises à un calculateur de pistage 17. Le calculateur de pistage 17 génère des pistes 18 à partir des informations envoyées par le récepteur bande étroite 13.

Si l'on se réfère à la figure 1, on distingue trois cas de figure. Le premier correspond au cas où un signal radioélectrique se situant dans la surface rectangulaire 3 mais pas dans la surface rectangulaire 5 n'est intercepté que par le récepteur large bande instantanée 13. Dans ce cas, seul le calculateur de pistage 16 recevant ses informations du récepteur large bande instantanée 13 génère une piste 18. Le second correspond au cas où un signal radioélectrique se situant dans la surface rectangulaire 4 mais pas dans la surface rectangulaire 5 n'est intercepté que par le récepteur bande étroite 14. Dans ce cas, seul le calculateur de pistage 17 recevant ses informations du récepteur bande étroite 14 génère une piste 18. Le troisième correspond au cas où un signal radioélectrique se situant dans la surface rectangulaire 5 est intercepté à la fois par le récepteur large bande instantanée 13 et par le récepteur bande étroite 14. Dans ce cas, les calculateurs de pistage 16 et 17 génèrent tous les deux une piste 18. Il existe donc des cas où pour une même source émettrice deux pistes 18 sont générés par les calculateurs de pistage 16 et 17. Les pistes 18 sont donc transmises à un dispositif de corrélation des pistes 19. Les pistes 18 redondantes sont supprimées par le dispositif de corrélation des pistes 19. Le dispositif de corrélation des pistes 19 délivre en sortie des pistes corrélées.

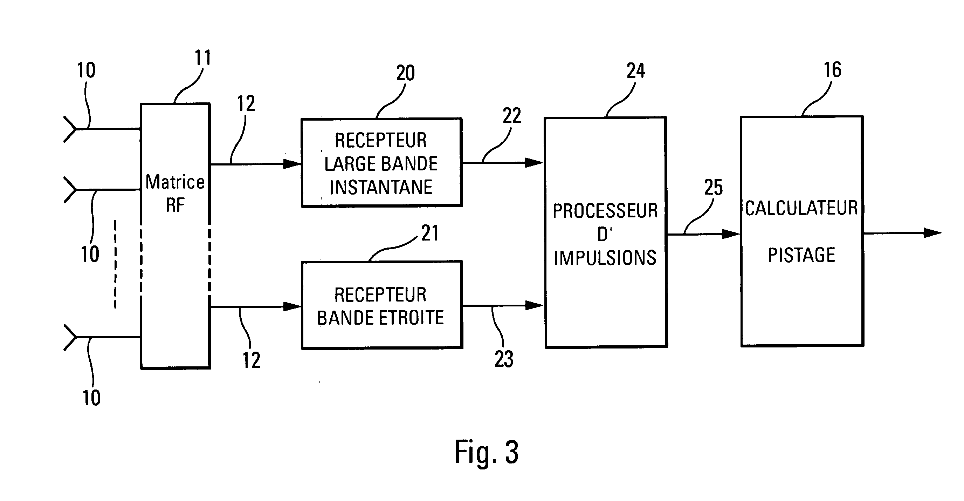

La figure 3 montre un système de réception de signaux radioélectriques selon l'invention. Les éléments identiques aux éléments déjà présentés à la figure 2 portent les mêmes références. A la différence du récepteur large bande du système de réception de signaux radioélectriques selon l'état de l'art illustré par la figure 2 qui délivre en sortie des pistes, le système de réception de signaux radioélectriques selon l'invention comporte au moins un récepteur large bande instantanée 20 délivrant un ensemble de descripteurs de signaux radioélectriques 22 en sortie pour chaque signal intercepté. De même, à la différence du récepteur bande étroite du système de réception de signaux radioélectriques selon l'état de l'art illustré par la figure 2 qui délivre en sortie des pistes, le système de réception de signaux radioélectriques selon l'invention comporte au moins un récepteur bande étroite 21 délivrant un ensemble de descripteurs de signaux radioélectriques 23 en sortie pour chaque signal intercepté. Le récepteur bande étroite 21 peut par exemple être un récepteur superhétérodyne.

Dans le cas d'un signal radioélectrique comportant une série d'impulsions, comme par exemple le signal émis par un radar, l'ensemble de descripteurs de signaux radioélectriques 22 ou 23 comporte un descripteur d'impulsions pour chaque impulsion présente dans le signal radioélectrique intercepté.

Un descripteur d'impulsions peut notamment comporter les informations suivantes : le niveau d'une impulsion avec la précision de mesure, la fréquence de l'impulsion avec la précision de mesure, la largeur de l'impulsion avec la précision de mesure, le temps d'arrivée de l'impulsion avec la précision de mesure, la direction d'arrivée avec la précision de mesure, l'identifiant du récepteur ayant intercepté l'impulsion, la polarisation de l'antenne 10 ayant interceptée l'impulsion, la présence ou non de modulation dans les impulsions.

Le système de réception de signaux radioélectriques selon l'invention comporte notamment un processeur d'impulsions 24 recevant en entrée les descripteurs de signaux radioélectriques 22 et 23 provenant du récepteur large bande instantanée 20 et du récepteur bande étroite 21. Le processeur d'impulsions a notamment pour fonction la corrélation des descripteurs de signaux radioélectriques 22 et 23 et le filtrage des descripteurs de signaux radioélectriques 22 et 23. Le processeur d'impulsions présente sur sa sortie 25 des descripteurs corrélés et filtrés de signaux radioélectriques.

Les descripteurs corrélés et filtrés de signaux radioélectriques 25 générés par le processeur d'impulsions peuvent notamment être dirigée vers un calculateur de pistage 16 réalisant le dé-entrelacement et le pistage afin de générer des pistes pour l'ensemble des signaux radioélectriques interceptés. Le calculateur de pistage 16 délivre en sortie une piste pour chaque signal radioélectrique intercepté provenant d'une même source.

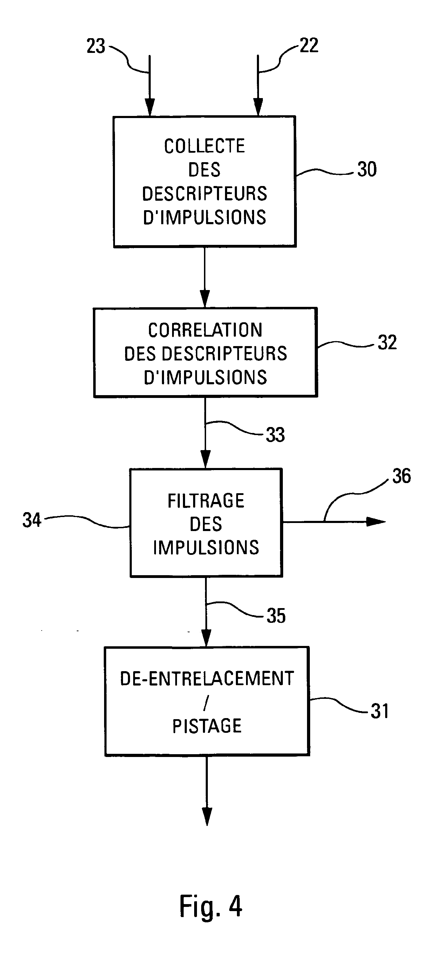

La figure 4 montre par un synoptique un procédé de fusion d'informations issues de capteurs radioélectriques selon l'invention. Les éléments identiques aux éléments déjà présentés aux figures précédentes portent les mêmes références. La collecte des descripteurs d'impulsions 30 est une étape du procédé selon l'invention. Les descripteurs d'impulsions provenant de l'ensemble des récepteurs radioélectriques dont les informations doivent être fusionnées par le procédé selon l'invention sont reçus et collectés à l'étape 30. Les descripteurs d'impulsions collectés peuvent par exemple être les descripteurs d'impulsions 22 générés par le récepteur large bande instantanée 20 et les descripteurs d'impulsions 23 générés par le récepteur bande étroite 21. L'étape 30 de collecte des descripteurs d'impulsions peut par exemple se faire de façon continue en parallèle des autres étapes du procédé selon l'invention. La figure 4 illustre le cas où deux récepteurs radioélectriques fournissent des descripteurs d'impulsions. Cependant, l'étape de collecte des descripteurs d'impulsions 30 s'applique à un nombre quelconque de récepteurs radioélectriques.

Les descripteurs d'impulsions 22, 23 collectés à l'étape 30 sont utilisés dans une autre étape 32 du procédé selon l'invention de corrélation des descripteurs d'impulsions. L'étape 32 de corrélation des descripteurs d'impulsions compare les différents paramètres des descripteurs d'impulsions 22, 23 collectés. Parmi les critères de comparaison figurent par exemple le temps d'arrivée de l'impulsion interceptée, le niveau de puissance de l'impulsion, la fréquence de l'impulsion ainsi que la largeur de l'impulsion. Lorsqu'un signal radioélectrique est intercepté et mesuré à la fois par le récepteur large bande instantanée 20 et par le récepteur bande étroite 21, les descripteurs d'impulsions 22 correspondant au signal intercepté ont des paramètres sensiblement identiques aux descripteurs d'impulsions 23 correspondant au signal intercepté. Après les comparaisons des descripteurs d'impulsions 22, 23, il est alors possible d'identifier les descripteurs d'impulsions 22, 23 décrivant les mêmes impulsions. Dans ce cas de figure, l'étape 32 de corrélation des impulsions élimine les descripteurs d'impulsions 22, 23 redondants, et ne conserve qu'un descripteur d'impulsions corrélé 33.

Toutefois, la caractérisation des grandeurs physiques des signaux radioélectriques n'atteint pas la même précision si les signaux radioélectriques sont interceptés par le récepteur large bande instantanée 13 ou par le récepteur bande étroite 14. C'est pourquoi, dans un mode de réalisation de l'étape 32 de corrélation des impulsions, une table prenant en compte les différents états de comparaison des paramètres figurant dans les descripteurs d'impulsions 22,23 permet de déterminer quel paramètre de quel descripteur d'impulsions 22,23 doit être conservé et transmis en fonction des grandeurs physiques du signal intercepté.

Lorsqu'un signal radioélectrique est intercepté et mesuré par un seul des récepteurs large bande instantanée 20 et bande étroite 21, les descripteurs d'impulsions corrélés 33 correspondant au signal intercepté sont transmis.

Dans un mode de réalisation avantageux, le procédé selon l'invention comporte une étape 34 de filtrage des impulsions. L'étape 34 de filtrage des impulsions reçoit en entrée les descripteurs d'impulsions corrélés 33 sortant de l'étape 32 de corrélation des impulsions. L'étape 34 de filtrage des impulsions a notamment pour fonction de sélectionner selon un certain nombre de critères des descripteurs d'impulsions filtrés 35 et de générer des commandes à exécuter via la sortie des commandes 36.

Dans un mode de réalisation, l'étape 34 de filtrage des impulsions comporte notamment une étape de marquage des impulsions. Un numéro est attribué à un descripteur d'impulsions corrélé 33 si les paramètres dudit descripteur d'impulsions corrélé 33 satisfont aux critères d'un ou plusieurs paramètres d'un filtre programmé. Ce numéro est un numéro identifié prédéterminé et connu du procédé selon l'invention. Il peut s'agir par exemple d'une catégorie prédéterminée d'impulsions, d'un numéro de séquence. Les critères peuvent notamment porter sur le niveau de puissance de l'impulsion, sur la fréquence de l'impulsion, sur la largeur de l'impulsion ainsi que sur la direction d'arrivée.

Dans un mode de réalisation, l'étape 34 de filtrage des impulsions comporte notamment une étape de déclenchement d'action. Une ou plusieurs commandes sont générées sur la sortie des commandes 36 par le procédé selon l'invention si les paramètres d'un des descripteurs d'impulsions corrélés 33 reçus par l'étape 34 de filtrage des impulsions satisfont aux critères d'un ou plusieurs paramètres d'un filtre programmé. Les critères peuvent notamment porter sur le niveau de puissance de l'impulsion, sur la fréquence de l'impulsion, sur la largeur de l'impulsion ainsi que sur la direction d'arrivée. Parmi les commandes générées, on peut citer par exemple une demande d'analyse complémentaire. Cette demande d'analyse complémentaire peut par exemple être effectuée par le récepteur bande étroite 21 lorsque le récepteur large bande instantanée 20 a détecté le signal décrit par le descripteur corrélé 33 ayant engendré cette commande. Parmi les commandes générées, on peut encore citer par exemple une commande vers un dispositif externe.

Dans un mode de réalisation, l'étape 34 de filtrage des impulsions comporte notamment une étape de réjection de descripteurs d'impulsions corrélés 33. Les descripteurs d'impulsions corrélés 33 dont les paramètres satisfont aux critères d'un ou plusieurs paramètres d'un filtre programmé ne sont pas transmis. Les critères peuvent notamment porter sur le niveau de puissance de l'impulsion, sur la fréquence de l'impulsion, sur la largeur de l'impulsion ainsi que sur la direction d'arrivée.

Dans un mode de réalisation, les descripteurs d'impulsions générés par le procédé selon l'invention peuvent notamment être transmis à une étape 37 de désentrelacement et de pistage. Cette étape 37 permet notamment de calculer des pistes à partir des informations fusionnées présentes dans les descripteurs d'impulsions générés par le procédé selon l'invention.

Le procédé de fusion d'informations issues de capteurs radioélectriques selon l'invention peut notamment être mis en oeuvre par le processeur d'impulsions 24. Le processeur d'impulsion peut par exemple être implémenté sur un dispositif quelconque adapté aux calculs numériques.

La génération de descripteurs d'impulsions par les récepteurs radioélectriques peut être implémentée sur des dispositifs de calculs propres à chaque récepteur, sur un dispositif de calculs mutualisé pour un certain nombre de récepteurs, ou encore sur le processeur d'impulsions 24.

La description précédente fait l'hypothèse de la présence d'un récepteur large bande instantanée 20 et d'un récepteur bande étroite 21. Toutefois, la description est applicable à tout système comportant un nombre indéterminé de récepteurs large bande instantanée 20 et de récepteurs bande étroite 21. De même, les récepteurs large bande instantanée 20 et de récepteurs bande étroite 21 peuvent être situées sur un même porteur ou au contraire sur des porteurs différents. Dans ce dernier cas, l'étape de collecte des descripteurs d'impulsion 30 reçoit tous les descripteurs d'impulsions 22, 23 des récepteurs répartis sur les différents porteurs par un moyen de transmission quelconque, par exemple une liaison radio.

**Revendications**

**1.** Procédé de fusion d'informations issues de récepteurs radioélectriques (20,21), lesdits récepteurs radioélectriques (20,21), lorsqu'ils interceptent des signaux radioélectriques, génèrent au moins un descripteur d'impulsions (22,23) pour chaque impulsion de chaque signal radioélectrique intercepté donné, les descripteurs d'impulsions (22,23) comportant un ensemble de caractéristiques propres à une impulsion donnée, **caractérisé en ce que** le procédé comporte au moins les étapes suivantes :

- une étape (30) de collecte des descripteurs d'impulsions (22,23) générés par les récepteurs radioélectriques (20,21) ;
- une étape (32) de corrélation des descripteurs d'impulsions aboutissant à la génération d'un descripteur d'impulsions corrélé (33) pour chaque impulsion de chaque signal radioélectrique intercepté à partir des descripteurs d'impulsions collectés (22,23).

2. Procédé selon la revendication 1 **caractérisé en ce qu'**il comporte une étape de filtrage (34) des descripteurs d'impulsions corrélés (33) par application d'un ou plusieurs filtres, chaque filtre comportant un ensemble de critères.

3. Procédé selon l'une des quelconques revendications précédentes **caractérisé en ce que** les caractéristiques d'un descripteur d'impulsions corrélé (33) sont obtenues :

- en comparant les caractéristiques incluses dans les descripteurs d'impulsions (22,23) générés par les récepteurs radioélectriques (20,21) ;
- en déterminant à partir des comparaisons les descripteurs d'impulsions (22,23) décrivant les mêmes impulsions ;
- en sélectionnant pour chaque paramètre le descripteur d'impulsions (22,23) qui doit fournir ce paramètre.

4. Procédé selon la revendication 3 **caractérisé en ce que** la comparaison des caractéristiques incluses dans les descripteurs d'impulsions (22,23) générés par les récepteurs radioélectriques (20,21) utilise au moins comme critère l'un des critères suivant :

- le temps d'arrivée de l'impulsion,
- le niveau de puissance de l'impulsion,
- la fréquence de l'impulsion,
- la largeur de l'impulsion.

5. Procédé selon la revendication 3 **caractérisé en ce que** lorsqu'il existe pour une impulsion d'un signal radioélectrique donné plusieurs descripteurs d'impulsions (22,23) générés par plusieurs récepteurs radioélectriques (20,21), une table prenant en compte les différents états de comparaison des paramètres figurant dans les descripteurs d'impulsions (22,23) détermine quel paramètre de quel descripteur d'impulsions (22,23) doit être utilisé pour fournir les paramètres du descripteur d'impulsions corrélés (33).

6. Procédé selon la revendication 3 **caractérisé en ce que** lorsqu'il existe pour une impulsion d'un signal radioélectrique donné un seul descripteur d'impulsions (22,23) généré par un seul récepteur radioélectrique (20,21), le descripteur d'impulsions corrélé (33) comporte au moins les mêmes caractéristiques que le descripteur d'impulsions (22,23) généré par le récepteur radioélectrique (20,21) ayant intercepté l'impulsion.

7. Procédé selon l'une des quelconques revendications 2 à 6 **caractérisé en ce que** l'étape de filtrage (34) comporte un filtre qui, lorsque certains paramètres d'un descripteur d'impulsions corrélés (33) satisfont aux critères dudit filtre, ajoute un paramètre au descripteur d'impulsions corrélé (33) correspondant à un numéro prédéterminé et connu du procédé selon l'invention.

8. Procédé selon la revendication précédente **caractérisé en ce que** les critères du filtre s'appliquent au moins sur l'un des paramètres d'un descripteur d'impulsions corrélés (33) suivant :

- le niveau de puissance de l'impulsion,
- sur la fréquence de l'impulsion,
- sur la largeur de l'impulsion,
- la direction d'arrivée.

9. Procédé selon l'une des quelconques revendications 2 à 8 **caractérisé en ce que** l'étape de filtrage (34) comporte au moins un filtre qui, lorsque certains paramètres d'un descripteur d'impulsions corrélés (33) satisfont aux critères dudit filtre, génère une ou plusieurs commandes sur une sortie des commandes (36).

10. Procédé selon la revendication précédente **caractérisé en ce que** les critères du filtre s'appliquent au moins sur l'un des paramètres d'un descripteur d'impulsions corrélés (33) suivant :

- le niveau de puissance de l'impulsion,
- sur la fréquence de l'impulsion,
- sur la largeur de l'impulsion,
- la direction d'arrivée.

11. Procédé selon l'une des quelconques revendications 2 à 10 **caractérisé en ce que** l'étape de filtrage (34) comporte au moins un filtre qui, lorsque certains paramètres d'un descripteur d'impulsions corrélés (33) satisfont aux critères dudit filtre, supprime le descripteur d'impulsions corrélé (33).

12. Procédé selon la revendication précédente **caractérisé en ce que** les critères du filtre s'appliquent au moins sur l'un des paramètres d'un descripteur d'impulsions corrélés (33) suivant :

- le niveau de puissance de l'impulsion,
- sur la fréquence de l'impulsion,
- sur la largeur de l'impulsion,
- la direction d'arrivée.

13. Système de réception radioélectrique **caractérisé en ce qu'**il comporte au moins un récepteur radioélectrique large bande instantanée (20) et un récepteur radioélectrique bande étroite (21), au moins un processeur d'impulsions (24), ledit récepteur radioélectrique large bande instantanée (20) lorsqu'il intercepte des signaux radioélectriques génèrent (30) au moins un descripteur d'impulsions (22) pour chaque impulsion de chaque signal radioélectrique intercepté donné, ledit récepteur radioélectrique bande étroite (20) lorsqu'il intercepte des signaux radioélectriques génèrent (31) au moins un descripteur d'impulsions (23) pour chaque impulsion de chaque signal radioélectrique intercepté donné, le processeur d'impulsions (24) étant adapté à :

- la collecte (30) des descripteurs d'impulsions (22,23) générés par le récepteur radioélectrique large bande instantanée (20) et le récepteur radioélectrique large bande étroite (21);
- la corrélation (32) des descripteurs d'impulsions aboutissant à la la génération d'un descripteur d'impulsions corrélé (33) pour chaque impulsion de chaque signal radioélectrique intercepté à partir des descripteurs d'impulsions collectés (22,23).

14. Système selon la revendication 13 **caractérisé en ce que** le processeur d'impulsions (24) est aussi adapté au filtrage (34) des descripteurs d'impulsions corrélés (33) par application d'un ou plusieurs filtres, chaque filtre comportant un ensemble de critères.

15. Système selon l'une des quelconques revendications 13 à 14 **caractérisé en ce que** les caractéristiques d'un descripteur d'impulsions corrélé (33) sont obtenues :

- en comparant les caractéristiques incluses dans les descripteurs d'impulsions (22,23) générés par les récepteurs radioélectriques (20,21) ;
- en déterminant à partir des comparaisons les descripteurs d'impulsions (22,23) décrivant les mêmes impulsions ;

- en sélection pour chaque paramètre le descripteur d'impulsions (22,23) qui doit fournir ce paramètre.

16. Système selon la revendication 15 **caractérisé en ce que** la comparaison des caractéristiques incluses dans les descripteurs d'impulsions (22,23) générés par les récepteurs radioélectriques (20,21) utilise au moins comme critère l'un des critères suivant :

- le temps d'arrivée de l'impulsion,
- le niveau de puissance de l'impulsion,
- la fréquence de l'impulsion,
- la largeur de l'impulsion.

17. Système selon la revendication 15 **caractérisé en ce que** lorsqu'il existe pour une impulsion d'un signal radioélectrique donné plusieurs descripteurs d'impulsions (22,23) générés par plusieurs récepteurs radioélectriques (20,21), une table prenant en compte les différents états de comparaison des paramètres figurant dans les descripteurs d'impulsions (22,23) détermine quel paramètre de quel descripteur d'impulsions (22,23) doit être utilisé pour fournir les paramètres du descripteur d'impulsions corrélés (33).

18. Système selon la revendication 15 **caractérisé en ce que** lorsqu'il existe pour une impulsion d'un signal radioélectrique donné un seul descripteur d'impulsions (22,23) généré par un seul récepteur radioélectrique (20,21), le descripteur d'impulsions corrélé (33) comporte au moins les mêmes caractéristiques que le descripteur d'impulsions (22,23) généré par le récepteur radioélectrique (20,21) ayant intercepté l'impulsion.

19. Système selon l'une des quelconques revendications 14 à 18 **caractérisé en ce que** le filtrage (34) comporte au moins un filtre qui, lorsque certains paramètres d'un descripteur d'impulsions corrélés (33) satisfont aux critères dudit filtre, ajoute un paramètre au descripteur d'impulsions corrélé (33) correspondant à un numéro prédéterminé et connu du procédé selon l'invention.

20. Système selon la revendication précédente **caractérisé en ce que** les critères du filtre s'appliquent au moins sur l'un des paramètres d'un descripteur d'impulsions corrélés (33) suivant :

- le niveau de puissance de l'impulsion,
- sur la fréquence de l'impulsion,
- sur la largeur de l'impulsion,
- la direction d'arrivée.

21. Système selon l'une des quelconques revendications 14 à 20 **caractérisé en ce que** le filtrage (34) comporte au moins un filtre qui, lorsque certains paramètres d'un descripteur d'impulsions corrélés (33) satisfont aux critères dudit filtre, génère une ou plusieurs commandes sur une sortie des commandes (36).

**22.** Système selon la revendication précédente **caractérisé en ce que** les critères du filtre s'appliquent au moins sur l'un des paramètres d'un descripteur d'impulsions corrélés (33) suivant :

- le niveau de puissance de l'impulsion,
- sur la fréquence de l'impulsion,
- sur la largeur de l'impulsion,
- la direction d'arrivée.

**23.** Système selon l'une des quelconques revendications 14 à 22 **caractérisé en ce que** le filtrage (34) comporte au moins un filtre qui, lorsque certains paramètres d'un descripteur d'impulsions corrélés (33) satisfont aux critères dudit filtre, supprime le descripteur d'impulsions corrélé (33).

**24.** Système selon la revendication précédente **caractérisé en ce que** les critères du filtre s'appliquent au moins sur l'un des paramètres d'un descripteur d'impulsions corrélés (33) suivant :

- le niveau de puissance de l'impulsion,
- sur la fréquence de l'impulsion,
- sur la largeur de l'impulsion,
- la direction d'arrivée.

**Claims**

**1.** Method for merging information from radio receivers (20, 21), said radio receivers (20, 21) generating, when they intercept radio signals, at least one pulse descriptor (22, 23) for each pulse of each given intercepted radio signal, the pulse descriptors (22, 23) including a set of characteristics specific to a given pulse, **characterized in that** the method includes at least the following steps:

- a step (30) for collecting pulse descriptors (22, 23) generated by the radio receivers (20, 21);
- a step (32) for correlating pulse descriptors leading to the generation of a correlated pulse descriptor (33) for each pulse of each intercepted radio signal based on the collected pulse descriptors (22, 23).

**2.** Method according to Claim 1, **characterized in that** it includes a step (34) for filtering correlated pulse descriptors (33) by applying one or more filters, each filter including a set of criteria.

**3.** Method according to either of the preceding claims, **characterized in that** the characteristics of a correlated pulse descriptor (33) are obtained:

- by comparing the characteristics included in the pulse descriptors (22, 23) generated by the radio receivers (20, 21);
- by determining from comparisons the pulse descriptors (22, 23) describing the same pulses;
- by selecting for each parameter the pulse descriptor (22, 23) which must supply this parameter.

**4.** Method according to Claim 3, **characterized in that** the comparison of the characteristics included in the pulse descriptors (22, 23) generated by the radio receivers (20, 21) uses at least as criterion one of the following criteria:

- the time of arrival of the pulse,
- the pulse power level,
- the pulse frequency,
- the pulse width.

**5.** Method according to Claim 3, **characterized in that** when, for a pulse of a given radio signal, there are several pulse descriptors (22, 23) generated by several radio receivers (20, 21), a table taking into account the various states of comparison of the parameters that feature in the pulse descriptors (22, 23) determines which parameter of which pulse descriptor (22, 23) must be used to supply the parameters of the correlated pulse descriptor (33).

**6.** Method according to Claim 3, **characterized in that** when, for a pulse of a given radio signal, there is only one pulse descriptor (22, 23) generated by a single radio receiver (20, 21), the correlated pulse descriptor (33) includes at least the same characteristics as the pulse descriptor (22, 23) generated by the radio receiver (20, 21) which has intercepted the pulse.

**7.** Method according to any one of Claims 2 to 6, **characterized in that** the filtering step (34) includes a filter which, when some parameters of a correlated pulse descriptor (33) meet the criteria of said filter, adds a parameter to the correlated pulse descriptor (33) corresponding to a number that is predetermined and known in the method according to the invention.

**8.** Method according to the preceding claim, **characterized in that** the criteria of the filter are applied at least to one of the following parameters of a correlated pulse descriptor (33):

- the pulse power level,
- the pulse frequency,

- the pulse width,
- the direction of arrival.

9. Method according to any one of Claims 2 to 8, **characterized in that** the filtering step (34) includes at least one filter which, when some parameters of a correlated pulse descriptor (33) meet the criteria of said filter, generates one or more commands on a command output (36).

10. Method according to the preceding claim, **characterized in that** the criteria of the filter are applied at least to one of the following parameters of a correlated pulse descriptor (33):

   - the pulse power level,
   - the pulse frequency,
   - the pulse width,
   - the direction of arrival.

11. Method according to any one of Claims 2 to 10, **characterized in that** the filtering step (34) includes at least one filter which, when some parameters of a correlated pulse descriptor (33) meet the criteria of said filter, removes the correlated pulse descriptor (33).

12. Method according to the preceding claim, **characterized in that** the criteria of the filter are applied at least to one of the following parameters of a correlated pulse descriptor (33):

   - the pulse power level,
   - the pulse frequency,
   - the pulse width,
   - the direction of arrival.

13. Radio reception system, **characterized in that** it includes at least one instantaneous broadband radio receiver (20) and one narrowband radio receiver (21), and at least one pulse processor (24), said instantaneous broadband radio receiver (20) generating (30), when it intercepts radio signals, at least one pulse descriptor (22) for each pulse of each given intercepted radio signal, said narrowband radio receiver (21) generating (31), when it intercepts radio signals, at least one pulse descriptor (23) for each pulse of each given intercepted radio signal, the pulse processor (24) being adapted to:

   - collect (30) pulse descriptors (22, 23) generated by the instantaneous broadband radio receiver (20) and the narrowband radio receiver (21);
   - correlate (32) pulse descriptors leading to the generation of a correlated pulse descriptor (33) for each pulse of each intercepted radio signal based on the collected pulse descriptors (22, 23).

14. System according to Claim 13, **characterized in that** pulse processor (24) is also adapted to filter (34) correlated pulse descriptors (33) by applying one or more filters, each filter including a set of criteria.

15. System according to either Claim 13 or Claim 14, **characterized in that** the characteristics of a correlated pulse descriptor (33) are obtained:

   - by comparing the characteristics included in the pulse descriptors (22, 23) generated by the radio receivers (20, 21);
   - by determining from comparisons the pulse descriptors (22, 23) describing the same pulses;
   - by selecting for each parameter the pulse descriptor (22, 23) which must supply this parameter.

16. System according to Claim 15, **characterized in that** the comparison of the characteristics included in the pulse descriptors (22, 23) generated by the radio receivers (20, 21) uses at least as criterion one of the following criteria:

   - the time of arrival of the pulse,
   - the pulse power level,
   - the pulse frequency,
   - the pulse width.

17. System according to Claim 15, **characterized in that** when, for a pulse of a given radio signal, there are several pulse descriptors (22, 23) generated by several radio receivers (20, 21), a table taking into account the various states of comparison of the parameters that feature in the pulse descriptors (22, 23) determines which parameter of which pulse descriptor (22, 23) must be used to supply the parameters of the correlated pulse descriptor (33).

18. System according to Claim 15, **characterized in that** when, for a pulse of a given radio signal, there is only one pulse descriptor (22, 23) generated by a single radio receiver (20, 21), the correlated pulse descriptor (33) includes at least the same characteristics as the pulse descriptor (22, 23) generated by the radio receiver (20, 21) which has intercepted the pulse.

19. System according to any one of Claims 14 to 18, **characterized in that** the filtering (34) includes at least one filter which, when some parameters of a correlated pulse descriptor (33) meet the criteria of said filter, adds a parameter to the correlated pulse descriptor (33) corresponding to a number that is predetermined and known in the method according to the invention.

**20.** System according to the preceding claim, **characterized in that** the criteria of the filter are applied at least to one of the following parameters of a correlated pulse descriptor (33):

- the pulse power level,
- the pulse frequency,
- the pulse width,
- the direction of arrival.

**21.** System according to any one of Claims 14 to 20, **characterized in that** the filtering (34) includes at least one filter which, when some parameters of a correlated pulse descriptor (33) meet the criteria of said filter, generates one or more commands on a command output (36).

**22.** System according to the preceding claim, **characterized in that** the criteria of the filter are applied at least to one of the following parameters of a correlated pulse descriptor (33):

- the pulse power level,
- the pulse frequency,
- the pulse width,
- the direction of arrival.

**23.** System according to any one of Claims 14 to 22, **characterized in that** the filtering (34) includes at least one filter which, when some parameters of a correlated pulse descriptor (33) meet the criteria of said filter, removes the correlated pulse descriptor (33).

**24.** System according to the preceding claim, **characterized in that** the criteria of the filter are applied at least to one of the following parameters of a correlated pulse descriptor (33):

- the pulse power level,
- the pulse frequency,
- the pulse width,
- the direction of arrival.

**Patentansprüche**

**1.** Verfahren zum Zusammenführen von Informationen, die von radioelektrischen Empfängern (20, 21) ausgegeben werden, wobei die radioelektrischen Empfänger (20, 21) dann, wenn sie radioelektrische Signale auffangen, wenigstens einen Impulsdeskriptor (22, 23) für jeden Impuls jedes gegebenen aufgefangenen radioelektrischen Signals erzeugen, wobei die Impulsdeskriptoren (22, 23) eine Gesamtheit von Charakteristiken enthalten, die zu einem gegebenen Impuls gehören, **dadurch gekennzeichnet, dass** das Verfahren wenigstens die folgenden Schritte enthält:

- einen Schritt (30) des Sammelns von Impulsdeskriptoren (22, 23), die von den radioelektrischen Empfängern (20, 21) erzeugt werden;
- einen Schritt (32) des Korrelierens der Impulsdeskriptoren, was zu der Erzeugung eines korrelierten Impulsdeskriptors (33) für jeden Impuls jedes aufgefangenen radioelektrischen Signals anhand der gesammelten Impulsdeskriptoren (22, 23) führt.

**2.** Verfahren nach Anspruch 1, **dadurch gekennzeichnet, dass** es einen Schritt (34) des Filterns der korrelierten Impulsdeskriptoren (33) durch Anwenden eines oder mehrerer Filter enthält, wobei jedes Filter eine Gesamtheit von Kriterien aufweist.

**3.** Verfahren nach einem der vorhergehenden Ansprüche, **dadurch gekennzeichnet, dass** die Charakteristiken eines korrelierten Impulsdeskriptors (33) dadurch erhalten werden, dass:

- die Charakteristiken, die in den Impulsdeskriptoren (22, 23) enthalten sind, die von den radioelektrischen Empfängern (20, 21) erzeugt werden, verglichen werden;
- anhand der Vergleiche die Impulsdeskriptoren (22, 23) bestimmt werden, die dieselben Impulse beschreiben;
- für jeden Parameter der Impulsdeskriptor (22, 23) gewählt wird, der diesen Parameter liefern soll.

**4.** Verfahren nach Anspruch 3, **dadurch gekennzeichnet, dass** der Vergleich der Charakteristiken, die in den Impulsdeskriptoren (22, 23) enthalten sind, die durch die radioelektrischen Empfänger (20, 21) erzeugt werden, als Kriterium wenigstens eines der folgenden Kriterien verwendet:

- die Ankunftszeit des Impulses,
- den Leistungspegel des Impulses,
- die Frequenz des Impulses,
- die Breite des Impulses.

**5.** Verfahren nach Anspruch 3, **dadurch gekennzeichnet, dass** dann, wenn für einen Impuls eines gegebenen radioelektrischen Signals mehrere Impulsdeskriptoren (22, 23) existieren, die durch mehrere radioelektrische Empfänger (20, 21) erzeugt werden, eine Tabelle, die die verschiedenen Zustände des Vergleichs der Parameter berücksichtigt, die in den Impulsdeskriptoren (22, 23) auftreten, bestimmt, welcher Parameter welches Impulsdeskriptors (22, 23) verwendet werden soll, um die Parameter des korrelierten Impulsdeskriptors (33) zu liefern.

6. Verfahren nach Anspruch 3, **dadurch gekennzeichnet, dass** dann, wenn für einen Impuls eines gegebenen radioelektrischen Signals ein einziger Impulsdeskriptor (22, 23) existiert, der durch einen einzigen radioelektrischen Empfänger (20, 21) erzeugt wird, der korrelierte Impulsdeskriptor (33) wenigstens dieselben Charakteristiken wie der Impulsdeskriptor (22, 23) enthält, der durch den radioelektrischen Empfänger (20, 21) erzeugt wird, der den Impuls aufgefangen hat.

7. Verfahren nach einem der Ansprüche 2 bis 6, **dadurch gekennzeichnet, dass** der Filterungsschritt (34) ein Filter enthält, das dann, wenn bestimmte Parameter eines korrelierten Impulsdeskriptors (33) die Kriterien des Filters erfüllen, zu dem korrelierten Impulsdeskriptor (33) einen Parameter hinzufügt, der einer vorgegebenen und bekannten Nummer des Verfahrens gemäß der Erfindung entspricht.

8. Verfahren nach dem vorhergehenden Anspruch, **dadurch gekennzeichnet, dass** die Kriterien des Filters auf wenigstens einen der Parameter eines korrelierten Impulsdeskriptors (33) angewendet werden, nämlich:

    - den Leistungspegel des Impulses,
    - die Frequenz des Impulses,
    - die Breite des Impulses,
    - die Ankunftsrichtung.

9. Verfahren nach einem der Ansprüche 2 bis 8, **dadurch gekennzeichnet, dass** der Filterungsschritt (34) wenigstens ein Filter enthält, das dann, wenn bestimmte Parameter eines korrelierten Impulsdeskriptors (33) die Kriterien des Filters erfüllen, einen oder mehrere Befehle an einem Befehlsausgang (36) erzeugt.

10. Verfahren nach dem vorhergehenden Anspruch, **dadurch gekennzeichnet, dass** die Kriterien des Filters auf wenigstens einen der Parameter eines korrelierten Impulsdeskriptors (33) angewendet werden, nämlich:

    - den Leistungspegel des Impulses,
    - die Frequenz des Impulses,
    - die Breite des Impulses,
    - die Ankunftsrichtung.

11. Verfahren nach einem der Ansprüche 2 bis 10, **dadurch gekennzeichnet, dass** der Filterungsschritt (34) wenigstens ein Filter enthält, das dann, wenn bestimmte Parameter eines korrelierten Impulsdeskriptors (33) die Kriterien des Filters erfüllen, den korrelierten Impulsdeskriptor (33) unterdrückt.

12. Verfahren nach dem vorhergehenden Anspruch, **da-**

**durch gekennzeichnet, dass** die Kriterien des Filters auf wenigstens einen der Parameter eines korrelierten Impulsdeskriptors (33) angewendet werden, nämlich:

    - den Leistungspegel des Impulses,
    - die Frequenz des Impulses,
    - die Breite des Impulses,
    - die Ankunftsrichtung.

13. Radioelektrisches Empfangssystem, **dadurch gekennzeichnet, dass** es wenigstens einen instantanen radioelektrischen Breitbandempfänger (20), einen radioelektrischen Schmalbandempfänger (21) und wenigstens einen Impulsprozessor (24) enthält, wobei der instantane radioelektrische Breitbandempfänger (20) dann, wenn er radioelektrische Signale (30) auffängt, wenigstens einen Impulsdeskriptor (22) für jeden Impuls jedes gegebenen aufgefangenen radioelektrischen Signals erzeugt, wobei der radioelektrische Schmalbandempfänger (21) dann, wenn er radioelektrische Signale auffängt, wenigstens einen Impulsdeskriptor (23) für jeden Impuls jedes gegebenen aufgefangenen radioelektrischen Signals erzeugt (31) und wobei der Impulsprozessor (24) dazu ausgelegt ist:

    - Impulsdeskriptoren (22, 23) zu sammeln (30), die von dem instantanen radioelektrischen Breitbandempfänger (20) und von dem radioelektrischen Schmalbandempfänger (21) erzeugt werden;
    - Impulsdeskriptoren zu korrelieren (32), was zu der Erzeugung eines korrelierten Impulsdeskriptors (33) für jeden Impuls jedes aufgefangenen radioelektrischen Signals anhand der gesammelten Impulsdeskriptoren (22, 23) führt.

14. System nach Anspruch 13, **dadurch gekennzeichnet, dass** der Impulsprozessor (24) außerdem für die Filterung (34) der korrelierten Impulsdeskriptoren (33) durch Anwenden eines oder mehrerer Filter ausgelegt ist, wobei jedes Filter eine Gesamtheit von Kriterien aufweist.

15. System nach einem der Ansprüche 13 bis 14, **dadurch gekennzeichnet, dass** die Charakteristiken eines korrelierten Impulsdeskriptors (33) dadurch erhalten werden, dass:

    - die Charakteristiken, die in den Impulsdeskriptoren (22, 23) enthalten sind, die durch die radioelektrischen Empfänger (20, 21) erzeugt werden, verglichen werden;
    - anhand der Vergleiche die Impulsdeskriptoren (22, 23) bestimmt werden, die dieselben Impulse beschreiben;
    - für jeden Parameter der Impulsdeskriptor (22, 23) gewählt wird, der diesen Parameter liefern soll.

16. System nach Anspruch 15, **dadurch gekennzeichnet, dass** der Vergleich der Charakteristiken, die in den Impulsdeskriptoren (22, 23) enthalten sind, die durch die radioelektrischen Empfänger (20, 21) erzeugt werden, als Kriterium wenigstens eines der folgenden Kriterien verwendet:

    - die Ankunftszeit des Impulses,
    - den Leistungspegel des Impulses,
    - die Frequenz des Impulses,
    - die Breite des Impulses.

17. System nach Anspruch 15, **dadurch gekennzeichnet, dass** dann, wenn für einen Impuls eines gegebenen radioelektrischen Signals mehrere Impulsdeskriptoren (22, 23) existieren, die von mehreren radioelektrischen Empfängern (20, 21) erzeugt werden, eine Tabelle, die die verschiedenen Zustände des Vergleichs der Parameter berücksichtigt, die in den Impulsdeskriptoren (22, 23) auftreten, bestimmt, welcher Parameter welches Impulsdeskriptors (22, 23) verwendet werden soll, um die Parameter des korrelierten Impulsdeskriptors (33) zu liefern.

18. System nach Anspruch 15, **dadurch gekennzeichnet, dass** dann, wenn für einen Impuls eines gegebenen radioelektrischen Signals ein einziger Impulsdeskriptor (22, 23) existiert, der durch einen einzigen radioelektrischen Empfänger (20, 21) erzeugt wird, der korrelierte Impulsdeskriptor (33) wenigstens dieselben Charakteristiken wie der Impulsdeskriptor (22, 23) enthält, der durch den radioelektrischen Empfänger (20, 21) erzeugt wird, der den Impuls aufgefangen hat.

19. System nach einem der Ansprüche 14 bis 18, **dadurch gekennzeichnet, dass** die Filterung (34) wenigstens ein Filter enthält, das dann, wenn bestimmte Parameter eines korrelierten Impulsdeskriptors (33) die Kriterien des Filters erfüllen, einen Parameter zu dem korrelierten Impulsdeskriptor (33) hinzufügt, der einer vorgegebenen und bekannten Nummer des Verfahrens gemäß der Erfindung entspricht.

20. System nach dem vorhergehenden Anspruch, **dadurch gekennzeichnet, dass** die Kriterien des Filters auf wenigstens einen der Parameter eines korrelierten Impulsdeskriptors (33) angewendet werden, nämlich:

    - auf den Leistungspegel des Impulses,
    - auf die Frequenz des Impulses,
    - auf die Breite des Impulses,
    - auf die Ankunftsrichtung.

21. System nach einem der Ansprüche 14 bis 20, **dadurch gekennzeichnet, dass** die Filterung (34) wenigstens ein Filter enthält, das dann, wenn bestimmte Parameter eines korrelierten Impulsdeskriptors (33) die Kriterien des Filters erfüllen, einen oder mehrere Befehle an einem Befehlsausgang (36) erzeugt.

22. System nach dem vorhergehenden Anspruch, **dadurch gekennzeichnet, dass** die Kriterien des Filters auf wenigstens einen der Parameter eines korrelierten Impulsdeskriptors (33) angewendet werden, nämlich:

    - den Leistungspegel des Impulses,
    - die Frequenz des Impulses,
    - die Breite des Impulses,
    - die Ankunftsrichtung.

23. System nach einem der Ansprüche 14 bis 22, **dadurch gekennzeichnet, dass** die Filterung (34) wenigstens ein Filter enthält, das dann, wenn bestimmte Parameter eines korrelierten Impulsdeskriptors (33) die Kriterien des Filters erfüllen, den korrelierten Impulsdeskriptor (33) unterdrückt.

24. System nach dem vorhergehenden Anspruch, **dadurch gekennzeichnet, dass** die Kriterien des Filters auf wenigstens einen der Parameter eines korrelierten Impulsdeskriptors (33) angewendet werden, nämlich:

    - den Leistungspegel des Impulses,
    - die Frequenz des Impulses,
    - die Breite des Impulses,
    - die Ankunftsrichtung.

Fig. 1

Fig. 2

Fig. 3

23          22

```
          ┌─────────────────┐
          │    COLLECTE      │
          │      DES         │
          │  DESCRIPTEURS    │──── 30
          │  D'IMPULSIONS    │
          └─────────────────┘
                   │
                   ▼
          ┌─────────────────┐
          │   CORRELATION    │
          │ DES DESCRIPTEURS │──── 32
          │  D'IMPULSIONS    │
          └─────────────────┘
                   │
                   └── 33
                   │
                   ▼
          ┌─────────────────┐              36
          │    FILTRAGE      │         ───────▶
  34 ─────│      DES         │
          │   IMPULSIONS     │
          └─────────────────┘
                   │
                   └── 35
                   │
                   ▼
          ┌─────────────────┐
          │ DE-ENTRELACEMENT │
          │        /         │──── 31
          │    PISTAGE       │
          └─────────────────┘
                   │
                   ▼
```

## Fig. 4

16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0012119 A
- US 4025920 A